# EUROPEAN PATENT APPLICATION

(11) **EP 4 773 492 A1**
(43) Date of publication of application: **08.07.2026**
(21) Application number: 24829355.7
(22) Date of filing: 05.03.2024
(51) Int. Cl.: H02M 1/088, H02M 1/32, H02M 7/5387

(54) **MICRO INVERTER PROTECTION CIRCUIT AND MICRO INVERTER TOPOLOGY CIRCUIT SYSTEM**

(30) Priority: 31.08.2023 CN 202311124826
(71) Applicant: Sungrow Power Supply Co., Ltd., Hefei, Anhui 230088 (CN)
(72) Inventor: CHEN, Qiaodi, Hefei, Anhui 230088 (CN); WANG, Hao, Hefei, Anhui 230088 (CN); WANG, Zichen, Hefei, Anhui 230088 (CN); WANG, Baoji, Hefei, Anhui 230088 (CN)
(74) Representative: Epping - Hermann - Fischer
(86) International application number: PCT/CN2024/080036
(87) International publication number: WO 2025/044130

(57) **Abstract**

A circuit for protecting a micro inverter and a circuit system having micro inverter topology. The circuit comprises a current sampling module, a hardware adjusting module, and a shutdown module that are sequentially connected. The current sampling module is configured to collect a first current signal in a bridge arm, in which a switch transistor is located, in secondary-side bridge arm circuitry comprising switch transistors. The hardware adjusting module is configured to receive the first current signal and a reference current signal and output an overcurrent indicating signal for the first current signal. The shutdown module is configured to receive the overcurrent indicating signal and a grid-polarity signal and output a shutdown control signal for the switch transistors, to enable secondary-side driving circuitry to shut down the switch transistors in the secondary-side bridge arm circuitry. Operating states of the switch transistors can be adjusted accurately and timely when overcurrent occurs in the secondary-side bridge arm circuitry, and the switch transistors are reliably protected from damage.

## Description

The present application claims priority to Chinese Patent Application No. 202311124826.4, titled "CIRCUIT FOR PROTECTING MICRO INVERTER AND CIRCUIT SYSTEM HAVING MICRO INVERTER TOPOLOGY", filed on August 31, 2023, with the China National Intellectual Property Administration, which is incorporated herein by reference in its entirety.

### FIELD

The present application relates to the technical field of circuits, and particularly to a circuit for protecting a micro inverter and a circuit system having micro inverter topology.

### BACKGROUND

Circuit topology of a micro inverter comprises primary-side bridge arm circuitry, a high-frequency transformer, and secondary-side bridge arm circuitry. The primary-side bridge arm circuitry is connected to a photovoltaic module, and the secondary-side bridge arm circuitry is connected to a power grid. The secondary-side bridge arm circuitry comprises multiple bidirectional switches, and an on/off state of the switch transistors in the bidirectional switch is altered according to polarity of a grid voltage. In conventional technology, alternation of the on/off states is subject to a certain delay regardless of being performed in a software manner of a hardware manner. In a case that the grid voltage changes its polarity at its peak or at large amplitude, the on/off state of the switch transistors may not be timely adjusted due to the delay, and thus a bridge arm in which the bidirectional switch is located is short-circuited. In such case, a sharp rise in current of the bidirectional switch may damage the bidirectional switch.

### SUMMARY

An objective of embodiments of the present disclosure is providing a circuit for protecting a micro inverter and a circuit system having micro inverter topology. Switch transistors are protected against damage when overcurrent occurs in secondary-side bridge arm circuitry.

In a first aspect, a circuit for protecting a micro inverter is provided according to an embodiment of the present disclosure. The circuit comprises a current sampling module, a hardware adjusting module, and a shutdown module, which are sequentially connected. The current sampling module is arranged in secondary-side bridge arm circuitry of micro-inverter circuitry. The shutdown module is connected to driving circuitry for the secondary-side bridge arm circuitry. The current sampling module is configured to collect a signal representing a first current in a bridge arm of the secondary-side bridge arm circuitry, where the secondary-side bridge arm circuitry comprises at least one bidirectional switch comprising multiple switch transistors, and a switch transistor of the multiple switch transistors is located in the bridge arm. The hardware adjusting module is configured to: receive the signal representing the first current and a signal representing a preset reference current; and output an overcurrent indicating signal for the signal representing the first current, where the overcurrent indicating signal is configured to indicate whether the first current is an overcurrent. The shutdown module is configured to: receive the overcurrent indicating signal and a signal representing a polarity of a power grid; and output a shutdown control signal for the multiple switch transistors to enable the driving circuitry to shut down the multiple switch transistors in the secondary-side bridge arm circuitry, where the shutdown control signal indicates a preset sequence of shutting down the multiple switch transistors.

In an embodiment, the secondary-side bridge arm circuitry comprises a bidirectional-switch bridge arm and a capacitor bridge arm. The multiple switch transistors are connected in series in the bidirectional-switch bridge arm, and the current sampling module is arranged in a main power path of the bidirectional-switch bridge arm.

In an embodiment, the current sampling module comprises a sampling resistor connected in series in the main power path, and the signal representing the first current depends on a voltage across the sampling resistor and resistance of the sampling resistor.

In an embodiment, the current sampling module comprises a current transformer, and the signal representing the first current depends on an output current of the current transformer and a quantity of turns of a coil in the current transformer.

In an embodiment, the hardware adjusting module is configured to: receive the signal representing the first current and the signal representing the reference current and output the overcurrent indicating signal for the signal representing the first current according to a relationship between magnitude of the signal representing the first current and magnitude of the signal representing the reference current.

In an embodiment, the micro-inverter circuitry comprises the secondary-side bridge arm circuitry having a single channel and direct-current-side circuitry having multiple channels. Each channel of the direct-current-side circuitry comprises a respective transformer and a respective channel of primary-side bridge arm circuitry. The hardware adjusting module comprises multiple comparators, and a quantity of the multiple comparators depends on a quantity of the multiple channels of the direct-current-side circuitry.

In an embodiment, the quantity of the multiple comparators is equal to the quantity of the multiple channels of the direct-current-side circuitry. Among the multiple comparators, different comparators receive sub-signals representing different reference currents and correspond to different quantities of channels, which transmit power to the secondary-side bridge arm circuitry, among the multiple channels of the direct-current-side circuitry. The sub-signal representing the respective reference current received by each comparator matches the respective quantity of channels, which transmit power to the secondary-side bridge arm circuitry, corresponding to said comparator.

In an embodiment, the quantity of the multiple comparators is equal to N. When a serial number of a comparator of the multiple comparators is equal to x, the respective quantity of channels corresponding to the comparator is equal to x, and the comparator receives the sub-signal representing the reference current for: the quantity of channels, which transmit power to the secondary-side bridge arm circuitry, among the multiple channels of the direct-current-side circuitry being equal to x. N is an integer greater than zero, and x is an integer greater than or equal to zero and less than or equal to N.

In an embodiment, each comparator is configured to: receive the signal representing the first current and the sub-signal representing the respective reference current, and output a respective overcurrent indicating sub-signal, where the overcurrent indicating sub-signal having a first value indicates that the first current do not exceed a respective threshold, and the overcurrent indicating sub-signal having a second value indicates that the first current exceeds the respective threshold. The overcurrent indicating signal outputted by the hardware adjusting module comprises the respective overcurrent indicating sub-signal outputted by each comparator.

In an embodiment, the hardware adjusting module comprises a current adjusting unit configured to adjust one or both of the signal representing the first current and signal representing the reference current.

In an embodiment, the multiple comparator comprises: a hardware comparator, or an analog comparator in a digital-signal processing chip.

In an embodiment, the shutdown module is configured to: receive the overcurrent indicating signal and the signal representing the polarity of the power grid; and output the shutdown control signal for the multiple switch transistors according to the signal representing the polarity of the power grid in response to the overcurrent indicating signal indicating that the first current is the overcurrent.

In an embodiment, the shutdown module is configured to: determine the quantity of channels, which transmit power to the secondary-side bridge arm circuitry, among one or more channels in direct-current-side circuitry, and obtain an overcurrent indicating sub-signal for the determined quantity from the overcurrent indicating signal outputted by the hardware adjusting module; obtain the signal representing the polarity of the power grid; and output the shutdown control signal for the multiple switch transistors according to the overcurrent indicating sub-signal for the determined quantity and the signal representing the polarity of the power grid.

In an embodiment, the secondary-side bridge arm circuitry comprises the multiple switch transistors that are connected in series. The shutdown module is configured to: output a first shutdown control signal, in response to the overcurrent indicating sub-signal for the determined quantity indicating that the first current exceeds a threshold and the signal representing the polarity of the power grid signal indicating positive polarity. The first shutdown control signal is configured to: shut down one or more transistors operating in a pulse-width-modulation mode among the multiple switch transistors, and then shut down one or more transistors operating in a bypass mode among the multiple switch transistors.

In an embodiment, the secondary-side bridge arm circuitry comprises a first switch transistor, a second switch transistor, a third switch transistor, and a fourth switch transistor, which are connected in series. The shutdown module is configured to: output the first shutdown control signal, in response to the overcurrent indicating sub-signal for the determined quantity indicating that the first current exceeds the respective threshold and the signal representing the polarity of the power grid signal indicating positive polarity. The first shutdown control signal is configured to: shut down the first switch transistor and the third switch transistor, and then shut down the second switch transistor and the fourth switch transistor. In response to the polarity of the power grid signal being positive, the first switch transistor and the third switch transistor operate in the pulse-width-modulation mode, and the second switch transistor and the fourth bidirectional transistor operate in the bypass mode.

In an embodiment, the secondary-side bridge arm circuitry comprises a first switch transistor, a second switch transistor, a third switch transistor, and a fourth switch transistor, which are connected in series. The shutdown module is configured to: output the second shutdown control signal, in response to the overcurrent indicating sub-signal for the determined quantity indicating that the first current exceeds the respective threshold and the signal representing the polarity of the power grid signal indicating negative polarity. The second shutdown control signal is configured to: shut down the second switch transistor and the fourth switch transistor, and then shut down the first switch transistor and the second switch transistor. In response to the polarity of the power grid signal being negative, the second switch transistor and the fourth switch transistor operate in the pulse-width-modulation mode, and the first switch transistor and the third bidirectional transistor operate in the bypass mode.

In a second aspect, a circuit system having micro inverter topology is provided according to an embodiment of the present disclosure. The circuit system comprises any foregoing circuit for protecting the micro inverter and the micro-inverter circuitry. The micro-inverter circuitry comprises the primary-side bridge arm circuitry, one or more transformers, and the secondary-side bridge arm circuitry.

Embodiments of the present disclosure achieve at least following beneficial effects.

The circuit for protecting the micro inverter and the circuit system having micro inverter topology are provided according to embodiments of the present disclosure. The circuit comprises the current sampling module, the hardware adjusting module, and the shutdown module, which are sequentially connected. The current sampling module is arranged in the secondary-side bridge arm circuitry of micro-inverter circuitry. The shutdown module is connected to the driving circuitry for the secondary-side bridge arm circuitry. The current sampling module is configured to collect the signal representing the first current in the bridge arm of the secondary-side bridge arm circuitry, where the secondary-side bridge arm circuitry comprises at least one bidirectional switch comprising the multiple switch transistors, and the switch transistor of the multiple switch transistors is located in the bridge arm. The hardware adjusting module is configured to: receive the signal representing the first current and the signal representing the preset reference current; and output the overcurrent indicating signal for the signal representing the first current, where the overcurrent indicating signal is configured to indicate whether the first current is an overcurrent. The shutdown module is configured to: receive the overcurrent indicating signal and the signal representing the polarity of the power grid; and output the shutdown control signal for the multiple switch transistors to enable the driving circuitry to shut down the multiple switch transistors in the secondary-side bridge arm circuitry, where the shutdown control signal indicates the preset sequence of shutting down the multiple switch transistors.

In such solution, the current sampling module, the hardware adjusting module and the shutdown module are connected in the circuit for protecting the micro inverter. The current sampling module collects the signal representing the first current acquired and inputs such signal into the hardware adjusting module, such that the overcurrent indicating signal is obtained. The shutdown module determines the sequence of shutting down the multiple switch transistors according to the overcurrent indicating signal and the signal representing the polarity of the power grid, and then generates and outputs the shutdown control signal for the switch transistors. Hence, operating states of the switch transistors can be adjusted accurately and timely when overcurrent occurs in the secondary-side bridge arm circuitry, and reliable protection against damage is provided on the switch transistors.

Other features and advantages of the present disclosure would be set forth in the following description. They would become apparent at least in part from the following description or may be appreciated through implementing embodiments of the present disclosure. Purposes and other advantages of the present disclosure may be achieved and obtained through structures specified in specification, claims, and drawings.

Hereinafter preferable embodiments are illustrated in detail with reference to drawings to facilitate understanding of the objectives, features, and advantages of the present disclosure.

### BRIEF DESCRIPTION OF THE DRAWINGS

Hereinafter drawings to be applied in embodiments of the present disclosure or in conventional technology are briefly described, in order to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.
FIG. 1 is a schematic circuit diagram of a single-stage micro inverter according to an embodiment of the present disclosure.
FIG. 2 is a schematic circuit diagram of a single-stage dual-channel micro inverter according to an embodiment of the present disclosure.
FIG. 3 is a schematic diagram of relationship between a voltage polarity of a power grid and shutdown of transistors in secondary-side bridge arm circuitry according to an embodiment of the present disclosure.
FIG. 4 is a schematic structural diagram of a circuit for protecting a micro inverter according to an embodiment of the present disclosure.
FIG. 5 is a schematic diagram of a circuit for protecting a micro inverter according to an embodiment of the present disclosure.
FIG. 6 is a schematic diagram of current sampling circuitry for a bidirectional-switch bridge arm according to an embodiment of the present disclosure.
FIG. 7 is a schematic diagram of current sampling circuitry for a bidirectional-switch bridge arm according to another embodiment of the present disclosure.
FIG. 8 is a schematic circuit diagram of a hardware adjusting module according to an embodiment of the present disclosure.
FIG. 9 is a flow chart of a PWM-generation process performed by a shutdown module according to an embodiment of the present disclosure.

### DETAILED DESCRIPTION

Hereinafter technical solutions in embodiments of the present disclosure are described clearly and completely in conjunction with the drawings to clarify objectives, technical solutions, and advantages of the present disclosure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

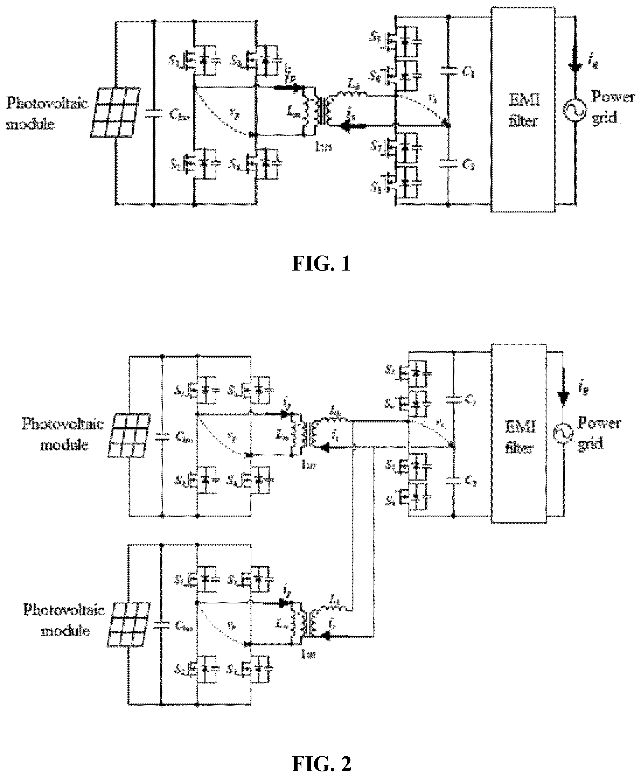

A micro inverter refers to an inverter that endures small power and has a maximum power point tracking (MPPT) function for a single photovoltaic cell in the photovoltaic power generation system. Circuit topology of the micro inverter has various structures. For example, reference is made to FIG. 1, which shows a circuit structure of a single-stage micro inverter. Such circuit topology comprises primary-side bridge arm circuitry, a high-frequency transformer, and secondary-side bridge arm circuitry.

As shown in FIG. 1, the primary-side bridge arm circuitry is connected to a photovoltaic module and comprises an H-bridge circuit. A middle part of the circuit topology is the high-frequency transformer capable of boosting voltage and achieving electrical isolation between a primary side and a secondary side. The secondary-side bridge arm circuitry is connected to a power grid and comprises multiple switch transistors. As shown in FIG.1, there are switch transistors S5, S6, S7, and S8. A bidirectional switch comprising switch transistors S5 and S6 is located in an upper arm of the secondary-side bridge arm circuitry, and a bidirectional switch comprising switch transistors S7 and S8 is located in a lower arm of the secondary-side bridge arm circuitry. Each switch transistor has a parallel diode. On/off states of the switch transistor are switched according to a voltage polarity of the power grid.

In an embodiment, when the voltage of the power grid is positive, switch transistor S5 in the upper bridge arm operates in a pulse-width-modulation (PWM) mode to implement high-frequency chopping, switch transistor S6 in the upper bridge arm operates in a bypass mode, switch transistor S7 in the lower bridge arm operates in the PWM mode to implement high-frequency chopping, and switch transistor S8 operates in the bypass mode. When the voltage of the power grid is negative, switch transistor S6 in the upper bridge arm operates in the PWM mode to implement high-frequency chopping, switch transistor S5 in the upper bridge arm operates in the bypass mode, switch transistor S8 in the lower bridge arm operates in the PWM to implement high-frequency chopping, and switch transistor S7 operates in the bypass mode. High-frequency chopping refers to a manner of chopping a signal with a high frequency to generate a rectangular wave.

In the single-stage micro inverter, an external phase shift between the primary-side bridge arm circuitry and the secondary-side bridge arm circuitry and an internal phase shift within the primary-side bridge arm circuitry may be controlled to achieve connection of such single-stage inverter into a power grid. The internal phase shift refers to a delay (in phase angle) of switch transistor S4 with respect to switch transistor S1, and the external phase shift refers to a delay (in phase angle) of switch transistor S5 or S8 with respect to switch transistor S1. The internal phase shift and the external phase shift may be controlled to transfer power.

The micro inverter may be categorized into a one-for-one micro inverter, one-for-two micro inverter, a one-for-four micro inverter, or one-for-six micro inverter, according to a quantity of photovoltaic modules connected to the micro inverter. The input of the micro-inverter circuitry may comprise multiple channels of photovoltaic modules. Reference is made to FIG. 2, in which circuit topology of the single-stage dual-channel micro inverter comprises an additional photovoltaic module on a basis of that of the single-stage micro inverter as shown in FIG. 1. Such circuit topology belongs to the one-for-two micro-inverter, in which the bidirectional-switch bridge arm and the capacitor bridge arm in the secondary-side bridge arm circuitry are shared between the two channels.

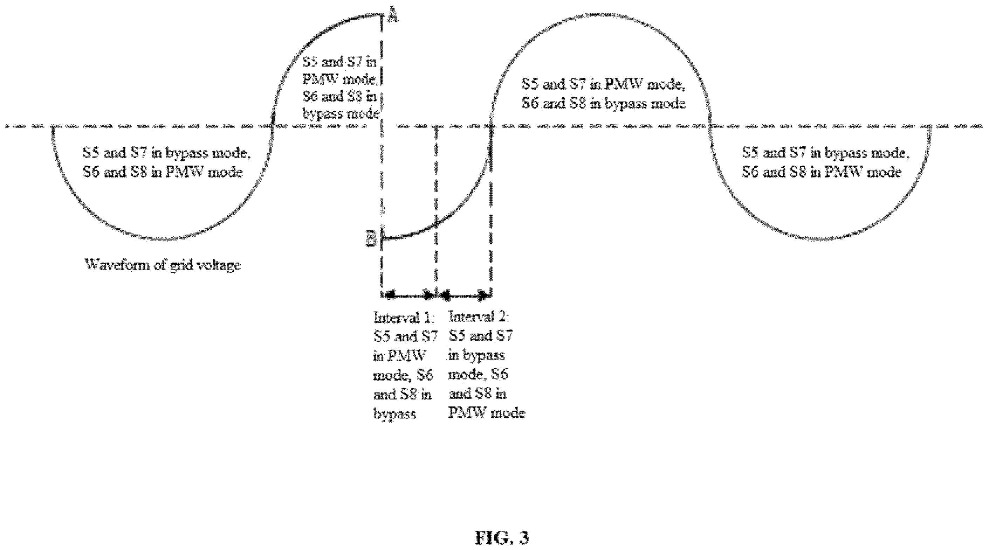

In the above circuity topology of the micro-inverter, the on/off states of the multiple switch transistors in the secondary-side bridge arm circuitry are required to be altered according to the voltage polarity of the power grid. In practice, the alternation may be implemented in a software manner or a hardware manner. In conventional technology, the alternation of the on/off states are subject to a certain delay regardless of the software manner or the hardware manner. The voltage polarity of the power grid may change at a peak or at large amplitude, for example, there is a sudden change in a phase of the power grid, or a surge occurs at a port of the power grid. As an example, reference is made to FIG. 3, where the voltage of the power grid is a sine wave. When the voltage is negative, i.e., the voltage is below the dotted line, switch transistors S5 and S7 are bypassed, while switch transistors S6 and S8 chop the wave. When the voltage is positive, i.e., the voltage is above the dotted line, switch transistors S5 and S7 chop the wave, while switch transistors S6 and S8 are bypassed.

In a case that the voltage changes abruptly from point A to point B, that is, the voltage polarity changes suddenly at the peak, the on/off states of the switch transistors in the bidirectional switch are not adjusted in interval 1 due to the delay in the alternation. In other words, a PWM generating logic in interval 1 is still that for positive voltage, i.e., switch transistors S5 and S7 chop the wave, while switch transistors S6 and S8 are bypassed. In such case, since the voltage has turned negative and switch transistors S6 and S8 are bypassed in interval 1, switch transistors S5 and S7 form a short-circuit path (i.e., a short circuit forms the bidirectional-switch bridge arm of the secondary bridge arm circuitry), and there is a sharp rise of the current flowing through the switch transistors. Hence, the switch transistors would be damaged. In conventional technology, no protection has been provided on a transformer current and a grid-connected current against the above hazard.

In view of at least the above issues, a circuit for protecting a micro inverter and a circuit system having micro inverter topology are provided according to embodiments of the present disclosure. The circuit and the circuit system are applicable to the field of solar panels, electric vehicles, and household appliances, as well as other circuit fields.

Hereinafter a circuit for protecting a micro inverter is first illustrated in embodiments in detail to facilitate understanding the present disclosure.

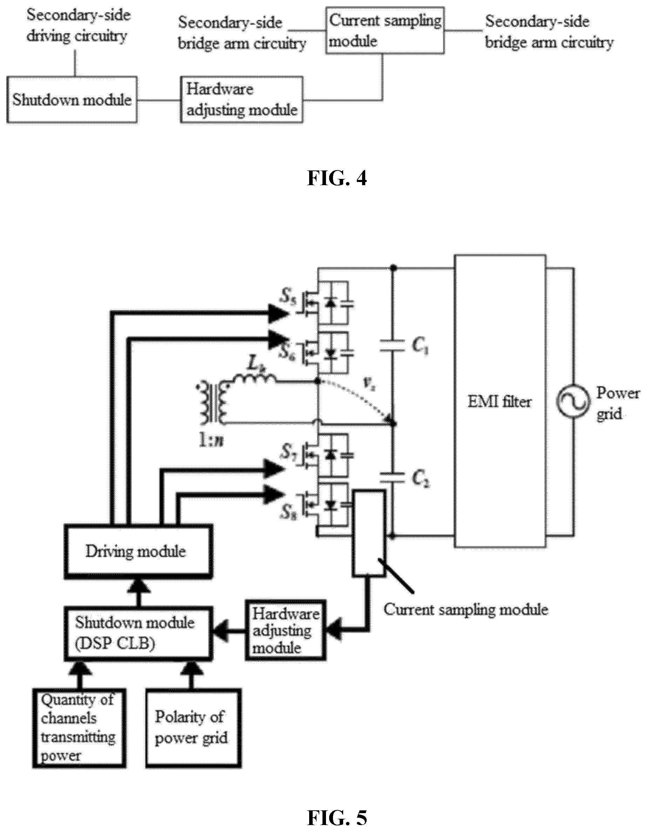

FIG. 4 is a schematic structural diagram of a circuit for protecting a micro inverter according to an embodiment of the present disclosure. As shown in FIG. 4, the circuit comprises a current sampling module, a hardware adjusting module, and a shutdown module connected, which are connected in the above-listed sequence. The current sampling module is arranged in secondary-side bridge arm circuitry of micro-inverter circuitry. The current sampling module is configured to collect a signal representing a first current (hereinafter first current signal) in a bridge arm of the secondary-side bridge arm circuitry, and a switch transistor is located in the bridge arm.

The secondary-side bridge arm circuitry may comprise bidirectional switch(es), and the bidirectional switch(es) comprises multiple switch transistors. The secondary-side bridge arm circuitry is connected to the power grid. In the micro-inverter circuitry, the secondary-side bridge arm circuitry is further connected to driving circuitry for the secondary side. The driving circuitry is connected to the shutdown module in the circuit for protecting the micro inverter. The driving circuitry is configured to receive a shutdown control signal for the switch transistors, which is outputted by the shutdown module, to shun down the switch transistors.

The hardware adjusting module is connected between the current sampling module and the shutdown module. The hardware adjusting module is configured to receive the first current signal from the current sampling module, receive a signal representing a reference current (hereinafter reference current signal), and output an overcurrent indicating signal for the first current signal. The overcurrent indicating signal and a signal representing a polarity of a power grid (hereinafter grid-polarity signal) are inputted to the shutdown module. Accordingly, the shutdown module is configured to select a shutdown logic and output the shutdown control signal for the switch transistors.

Reference is made to FIG. 5. In an embodiment, the current sampling module in the circuit for protecting the micro inverter is arranged between a capacitor bridge arm and a lower bidirectional-switch bridge arm in the secondary-side bridge arm circuitry of the micro-inverter circuitry. The current sampling module is configured to collect a signal representing current flowing through the bidirectional-switch bridge arm, i.e. the first current signal. The current sampling module is coupled to the hardware adjusting module, and the hardware adjusting module is configured to adjust the first current signal and then output the overcurrent indicating signal for the first current signal according to a combination of the first current signal and the reference current signal. The overcurrent indicating signal is configured to indicate whether the first current is an overcurrent.

The hardware adjusting module is further coupled to the shutdown module and is configured to input the overcurrent indicating signal to the shutdown module. In addition, the grid-polarity signal and a quantity of channels are inputted to the shutdown module. The shutdown module determines on a basis of the inputs to select a shutdown logic and output the shutdown control signal for the switch transistors. The shutdown control signal is configured to indicate a preset sequence of shutting down the multiple switch transistors. The shutdown module is coupled to the driving circuitry for the secondary side and transmits the shutdown control signal to the driving circuitry. Thereby, the driving circuitry is enabled to perform the shutdown operations.

The quantity of channels refers to a quantity of channels of direct-current-side circuitry which are connected to the secondary-side bridge arm circuitry. Such quantity may be determined through a voltage of the direct-current-side circuitry. The quantity of channels, the grid-polarity signal, and the overcurrent indicating signal outputted by the hardware adjusting module are inputted into the shutdown module, and the shutdown module performs comprehensive analysis on the above information to select the shutdown logic and then output the shutdown control signal corresponding to the shutdown logic. Among the multiple switch transistors, some switch transistors are different from each other in operation modes, and hence these switch transistors are shut down at different moments in a sequence. The shutdown control signal carries the preset sequence of shutting down the multiple switch transistors.

In the above solution, the current sampling module, the hardware adjusting module, and the shutdown module are connected in the circuit for protecting the micro inverter. The current sampling module collects the first current signal and inputs the first current signal to the hardware adjusting module to obtain the overcurrent indicating signal. The shutdown module determines the sequence of shutting down the multiple switch transistors according to the overcurrent indicating signal and the grid-polarity signal to generate and output the shutdown control signal for the multiple the switch transistors. Hence, operating states of the switch transistors can be adjusted accurately and timely when overcurrent occurs in the secondary-side bridge arm circuitry, and reliable protection against damage is provided on the switch transistors.

In an embodiment, the secondary-side bridge arm circuitry comprises a bidirectional-switch bridge arm and a capacitor bridge arm. The multiple switch transistors are connected in series in the bidirectional-switch bridge arm, and the current sampling module is arranged in a main power path of the bidirectional-switch bridge arm.

Reference is made to FIG. 5. The secondary-side bridge arm circuitry comprises the bidirectional-switch bridge arm and the capacitor bridge arm. Switch transistors S5, S6, S7, and S8 are connected in series in the bidirectional-switch bridge arm. The capacitors C1 and C2 are connected in the capacitor bridge arm. The current sampling module may be arranged at any position in the main power path of the bidirectional-switch bridge arm, as long as it can detect a current in the bidirectional-switch bridge arm. The main power path is a circuit path that directly implements power transfer and power conversion.

In an embodiment, the current sampling module comprises a sampling resistor connected in series in the main power path, and the first current signal depends on a voltage across the sampling resistor and resistance of the sampling resistor.

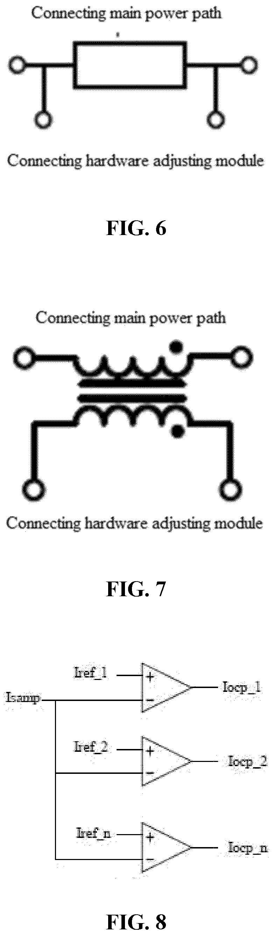

The current sampling module may comprise the sampling resistor. The sampling resistor refers to a resistor for detecting magnitude of a current in ae circuit. The sampling resistor is connected in series in the main power path. The voltage across the sampling resistor and the resistance of the sampling resistor determines the first current signal. When the current sampling module comprises the sampling resistor, a manner of connecting the current sampling module into the bidirectional-switch bridge arm may be shown in FIG. 6. In FIG. 6, two upper terminals are connected to the main power path, and the two lower terminals are connected to circuitry of the hardware adjusting module.

In another embodiment, the current sampling module comprises a current transformer, and the first current signal depends on an output current of the current transformer and a quantity of turns of a coil in the current transformer.

The current sampling module may comprise the current transformer. The current transformer may be configured to convert a large current into a small current to facilitate measuring the current via an electric meter. The output current of the current transformer and the quantity of turns of the coil in the current transformer determines the first current signal. When the current sampling module comprises the current transformer, a manner of connecting the current sampling module into the bidirectional-switch bridge arm may be shown in FIG. 7. In FIG. 7, two upper terminals are connected to the main power path, and the two lower terminals are connected to circuitry of the hardware adjusting module.

In an embodiment, the hardware adjusting module is configured to: receive the first current signal and the reference current signal; and output the overcurrent indicating signal for the first current signal according to relationship between magnitude of the first current signal and magnitude of the reference current signal.

In practice, the hardware adjusting module may receive the first current signal and the preset reference current signal. The reference current signal may be preset by the hardware adjusting module according to a grid voltage and a load in the circuitry, or according to the quantity of channels in the direct-current-side circuitry. Safety of components and devices in circuitry may be ensured through presetting the reference current signal. The overcurrent indicating signal may be outputted according to the relationship between magnitude of the first current signal and magnitude of the reference current signal. In an embodiment, the hardware adjusting module outputs the overcurrent indicating signal for the first current signal, in a case that a parameter (e.g., a value) of the first current signal is greater than that of the reference current signal, that is, in a case that the current in the bidirectional-switch bridge arm of the secondary-side bridge arm circuitry is too large.

FIG. 8 shows an exemplary circuit diagram of the hardware adjusting module. Isamp represents the first current signal outputted by the current sampling module and inputted to the "-" input terminals of the hardware adjusting module. Iref_1, Iref_2, ..., and Iref_n are sub-signals representing reference currents (hereinafter reference current sub-signals) for different channels of the direct-current-side circuitry, and they are inputted to the "+" input terminals of the hardware adjusting module. Iocp_1, Iocp_2, ..., and Iocp_n are the overcurrent indicator sub-signals for the first current signal, which correspond to different channels of the direct-current-side circuitry, and they are outputted by the hardware adjusting module.

The label "n" in "Iref_n" and "Iocp_n" represents a quantity of channels of the direct-current-side circuitry. In practice, whether components in a channel of the direct-current-side circuitry are coupled into the whole circuitry may be determined according to a voltage of the channel.

In an embodiment, the micro-inverter circuitry comprises the secondary-side bridge arm circuitry having a single channel and direct-current-side circuitry having multiple channels. Each channel of the direct-current-side circuitry comprises a respective transformer and a respective channel of primary-side bridge arm circuitry. The hardware adjusting module comprises multiple comparators, and a quantity of the multiple comparators depends on a quantity of the multiple channels of the direct-current-side circuitry.

The micro-inverter circuitry may comprise the secondary-side bridge arm circuitry having the single channel and direct-current-side circuitry having the multiple channels. For instance, a one-for-one micro-inverter circuitry comprises the secondary-side bridge arm circuitry of one channel and the direct-current-side circuitry of one channel, and a one-for-two micro-inverter circuitry comprises the secondary-side bridge arm circuitry of one channel and the direct-current-side circuitry of two channels. The direct-current-side circuitry may comprise the respective transformer and the respective channel of primary-side bridge arm circuitry. A photovoltaic module in a channel of the direct-current-side circuitry is only capable of generating a direct current, and magnitude of the direct current depends on light intensity. The direct current is converted into an alternating current through the micro inverter to facilitate transmission and utilization of electric power.

The hardware adjusting module may comprise the multiple comparators, and the quantity of the multiple comparators may depend on the quantity of the multiple channels of the direct-current-side circuitry.

In an embodiment, the quantity of the multiple comparators is equal to the quantity of the multiple channels of the direct-current-side circuitry. Among the multiple comparators, different comparators receive different reference currents sub-signals and correspond to different quantities of channels, which transmit power to the secondary-side bridge arm circuitry, among the multiple channels of the direct-current-side circuitry. The respective reference current sub-signal received by each comparator matches the respective quantity of channels, which transmit power to the secondary-side bridge arm circuitry, corresponding to such comparator.

In other words, the quantity of comparators in the hardware adjusting module is equal to that of the channels of the direct-current-side circuitry in the micro-inverter circuitry. For instance, the quantity of the channels of the direct-current-side circuitry is equal to 2, and the quantity of comparators in the hardware adjusting module is also equal to 2. Among the multiple comparators, the reference current sub-signals inputted into different comparators are different. Each direct-current-side circuitry may correspond to its respective comparator, that is, different comparators correspond to cases in which there are different quantities of channels, in the direct-current-side circuitry, transmitting power to the secondary-side bridge arm circuitry. Since different circuit components may be configured in different channels of the direct-current-side circuitry, different safety currents are configured for the different quantities of channels transmitting power to the secondary-side bridge arm circuitry. Hence, the respective reference current sub-signals inputted into the comparators for the different quantities of channels transmitting power to the secondary-side bridge arm circuitry may also be different.

In an embodiment, the quantity of the comparator(s) is equal to N. When a serial number of a comparator is equal to x, the respective quantity of channels corresponding to the comparator is equal to x, and the comparator receives the reference current sub-signal for the quantity of channels, which transmit power to the secondary-side bridge arm circuitry, being equal to x. N is an integer greater than zero, and x is an integer greater than or equal to zero and less than or equal to N.

The quantity of the comparator(s) may be equal to N. For the comparator having the serial number equal to x, the case in which there are x channel(s) in direct-current-side circuitry transmitting power to the secondary-side bridge arm circuitry corresponds to such comparator, and the comparator receives the reference current sub-signal configured for such case of the x channel(s). N is an integer greater than zero, and x is an integer greater than or equal to zero and less than or equal to N.

In an embodiment, each comparator is configured to: receive the first current signal and the respective reference current sub-signal, and output an overcurrent indicating sub-signal, where the overcurrent indicating sub-signal having a first value indicates that the first current do not exceed a respective threshold, and the overcurrent indicating sub-signal having a second value indicates that the first current exceeds the respective threshold. The overcurrent indicating signal outputted by the hardware adjusting module comprises the overcurrent indicating sub-signal outputted by each comparator.

In other words, the comparators may output the respective overcurrent indicating sub-signal according to the first current signal and the respective reference current sub-signal that are inputted. The overcurrent indicating sub-signal may have multiple candidate values, such as 0 and 1. The first current is determined not to be an overcurrent for the case of the respective quantity of channels when the overcurrent indicating signal has the first value and is determined to be the overcurrent signal for the case of the respective quantity of channels when the overcurrent indicating signal has the second value. In an embodiment, the first current is determined not to be an overcurrent when the overcurrent indicating signal has a value of 1 and is determined to be the overcurrent signal when the overcurrent indicating signal has a value of 0.

Since the hardware adjusting module may comprise multiple comparators, overcurrent indicating signal outputted by the hardware adjusting module may comprise the respective overcurrent indicating sub-signal outputted by all comparators.

Hence, the first current signal and the reference current sub-signal may be inputted into the corresponding comparator to obtain the corresponding overcurrent indicating sub-signal. Accordingly, it can be learned precisely which channel(s) of direct-current-side circuitry introduces the overcurrent issue.

In an embodiment, the hardware adjusting module comprises a current adjusting unit configured to adjust one or both of the first current signal and the reference current signal. In an embodiment, the hardware adjusting module comprises a current adjusting unit configured to: reduce or amplify the first current signal, configured to reduce or amplify the reference current signal, or reduce or amplify the first current signal and the reference current signal. Hence, a range of signals inputted into the comparator is more appropriate.

In an embodiment, the comparator comprises: a hardware comparator, or an analog comparator in a digital-signal processing chip. In practice, the comparator may include the hardware comparator or may be the analog comparator in a digital signal processing chip. No matter which form is adopted, the comparator is configured to compare the two input signals and output a high-level signal or a low-level signal representing the relationship between the first current signal and the reference current signal or sub-signal.

In an embodiment, the shutdown module is configured to: receive the overcurrent indicating signal and the grid-polarity signal; and output the shutdown control signal for the multiple switch transistors according to the grid-polarity signal, in response to the overcurrent indicating signal indicating that the first current is the overcurrent.

In practice, the overcurrent indicating signal and the grid-polarity signal may be inputted into the shutdown module. The overcurrent indicator signal is configured to indicate whether the first current is the overcurrent. In a case that the first current is the overcurrent, devices in the circuitry have a risk of being damaged, and it is necessary to adjust the operating mode of the multiple switch transistors in time. Since the polarity of the power grid affects the operation of the multiple switch transistors, both the grid-polarity signal and the overcurrent indicating signal are inputted into the shutdown module. In a case that the overcurrent indicating signal indicates that the first current is the overcurrent, the shutdown module may output the shutdown control signal for the switch transistors according to the grid-polarity signal. The corresponding switch transistors are timely shut down according to the shutdown control signal to ensure safety of the circuit devices.

Hence, the overcurrent indicating signal and the grid-polarity signal may be inputted into the shutdown module to output the shutdown control signal for the switch transistors, such that the operating modes of the switch transistors are adjusted in time to protect the circuit components from damage.

In an embodiment, the shutdown module is configured to: determine the quantity of channels, which transmit power to the secondary-side bridge arm circuitry, among the multiple channels in the direct-current-side circuitry, and obtain the overcurrent indicating sub-signal for the determined quantity from the overcurrent indicating signal outputted by the hardware adjusting module; obtain the grid-polarity signal; and output the shutdown control signal for the multiple switch transistors according to the overcurrent indicating sub-signal for the determined quantity and the grid-polarity signal.

In practice, the shutdown module may be configured to determine the quantity of channels in the direct-current-side circuitry transmitting power to the secondary-side bridge arm circuitry. In an embodiment, such quantity may be determined through detecting a voltage of (each channel) in the direct-current-side circuitry. In addition, the comparator in the hardware adjusting module may output its respective overcurrent indicating sub-signal for its respective quantity, of channels in the direct-current-side circuitry transmitting power to the secondary-side bridge arm circuitry, according to the first current signal and its respective reference current sub-signal that are inputted. The shutdown module is coupled to the hardware adjusting module, so that the respective overcurrent indicating sub-signal for each quantity, of channels in the direct-current-side circuitry transmitting power to the secondary-side bridge arm circuitry, can be obtained from the overcurrent indicating signal outputted by the hardware adjusting module. The shutdown module may be coupled to circuitry of the power grid to obtain the grid-polarity signal. Then, the shutdown module outputs the shutdown control signals for the switch transistors based on the obtained overcurrent indicating sub-signal and the polarity signal.

Hence, the shutdown module determines the quantity of channels in the direct-current-side circuitry transmitting power to the secondary-side bridge arm circuitry and receives the respective overcurrent indicating sub-signal for each candidate quantity of channels in the direct-current-side circuitry transmitting power to the secondary-side bridge arm circuitry. The shutdown module outputs the shutdown control signal according to a combination of the above information and the grid-polarity signal. The shutdown logic is selected according to the quantity of the channels in direct-current-side circuitry transmitting power to the secondary-side bridge arm circuitry, which improves reliability of protection on the switch transistors of the bidirectional switch(es) in the secondary-side bridge arm circuitry.

In an embodiment, the secondary-side bridge arm circuitry comprises the multiple switch transistors that are connected in series. The shutdown module is configured to: output a first shutdown control signal, in response to the overcurrent indicating sub-signal for the determined quantity indicating that the first current exceeds the respective threshold and the grid-polarity signal indicating positive polarity. The first shutdown control signal is configured to: shut down one or more transistors operating in a PWM mode among the multiple switch transistors, and then shut down one or more transistors operating in a bypass mode among the multiple switch transistors.

The multiple switch transistors may be connected in series in the secondary-side bridge arm circuitry. The shutdown module may output the first shutdown control signal, in a case that: the obtained overcurrent indicating sub-signal indicates that the first current exceeds the respective threshold, and the grid-polarity signal indicates that the voltage of the power grid is positive. Among the multiple switch transistors, the first shutdown control signal is configured to shut down the one(s) operating in the PWM mode, and then shut down the one(s) transistors operating in the bypass mode.

The main power path of the secondary-side bridge arm circuitry is switched between electrical connection and electrical disconnection under a high frequency, and hence the transistor(s) controlling such switching are the transistor(s) operating in the PWM mode.

In an embodiment, the secondary-side bridge arm circuitry comprises a first switch transistor, a second switch transistor, a third switch transistor, and a fourth switch transistor, which are connected in series. The shutdown module is configured to: output the first shutdown control signal, in response to the overcurrent indicating sub-signal for the determined quantity indicating that the first current exceeds the respective threshold and the signal representing the polarity of the power grid signal indicating positive polarity. The first shutdown control signal is configured to: shut down the first switch transistor and the third switch transistor, and then shut down the second switch transistor and the fourth switch transistor. In response to the polarity of the power grid signal being positive, the first switch transistor and the third switch transistor operate in the PWM mode, and the second switch transistor and the fourth bidirectional transistor operate in the bypass mode.

As an example, the secondary-side bridge arm circuitry comprises the first switch transistor, the second switch transistor, the third switch transistor, and the fourth switch transistor, which are connected in series. The first switch transistor and the second switch transistor are connected in the upper bridge arm, and the third switch transistor and the fourth switch transistor are connected in the lower bridge arm. The shutdown module may output the first shutdown control signal, in a case that: the obtained overcurrent indicating sub-signal indicates that the first current exceeds the respective threshold, and the grid-polarity signal indicates that the voltage of the power grid is positive. The first shutdown control signal is configured to shut down the first switch transistor and the third switch transistor first, and then shut down the second switch transistor and the fourth switch transistor. When the voltage polarity of the power grid signal is positive, the first switch transistor and the third switch transistor operate in the PWM mode, and the second switch transistor and the fourth bidirectional transistor operate in the bypass mode.

In an embodiment, the secondary-side bridge arm circuitry comprises a first switch transistor, a second switch transistor, a third switch transistor, and a fourth switch transistor, which are connected in series. The shutdown module is configured to: output the second shutdown control signal, in response to the overcurrent indicating sub-signal for the determined quantity indicating that the first current exceeds the respective threshold and the signal representing the polarity of the power grid signal indicating negative polarity. The second shutdown control signal is configured to: shut down the second switch transistor and the fourth switch transistor, and then shut down the first switch transistor and the second switch transistor. In response to the polarity of the power grid signal being negative, the second switch transistor and the fourth switch transistor operate in the pulse-width-modulation mode, and the first switch transistor and the third bidirectional transistor operate in the bypass mode.

As an example, the secondary-side bridge arm circuitry comprises the first switch transistor, the second switch transistor, the third switch transistor, and the fourth switch transistor, which are connected in series. The first switch transistor and the second switch transistor are connected in the upper bridge arm, and the third switch transistor and the fourth switch transistor are connected in the lower bridge arm. The shutdown module may output the second shutdown control signal, in a case that: the obtained overcurrent indicating sub-signal indicates that the first current exceeds the respective threshold, and the grid-polarity signal indicates that the voltage of the power grid is negative. The second shutdown control signal is configured to shut down the second switch transistor and the fourth switch transistor first, and then shut down the first switch transistor and the third switch transistor. When the voltage polarity of the power grid signal is negative, the second switch transistor and the fourth switch transistor operate in the pulse-width-modulation mode, and the first switch transistor and the third bidirectional transistor operate in the bypass mode.

Hence, the shutdown module outputs the shutdown control signal after selecting the shutdown logic. The shutdown control signal carries control information on shutdown of the multiple switch transistors and is transmitted to the driving circuit for the secondary side to enable shutdown operation. Different switch transistors may be shut down at different moments. The transistor(s) in the PMW mode are shut down first, and then the transistor(s) in the bypass mode are shut down after a certain delay. Thereby, the switch transistors can be protected from damage due to overcurrent induced by their short circuit, when the voltage polarity of the power grid changes abruptly.

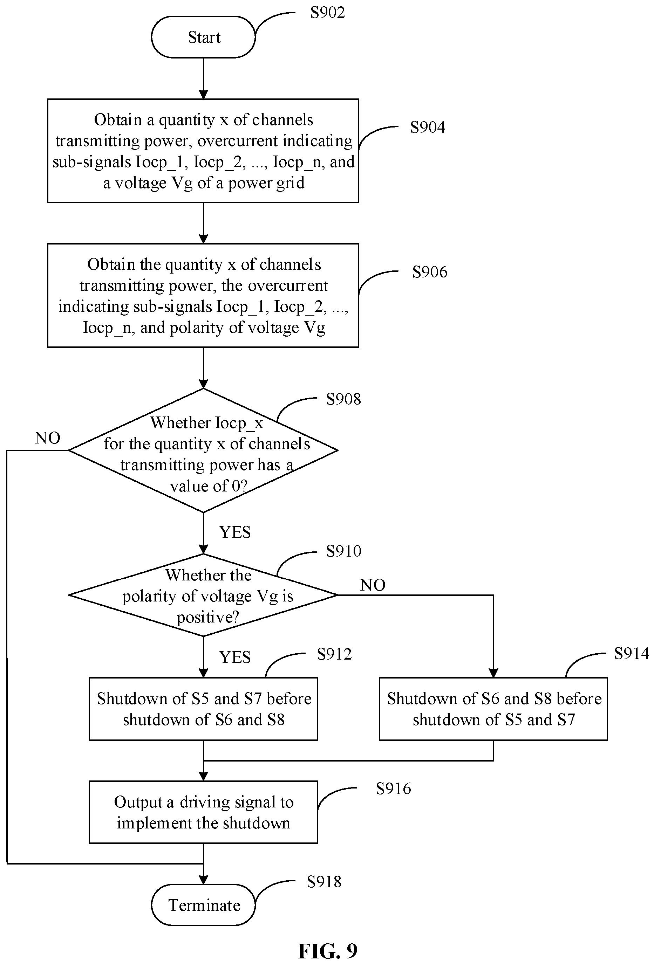

Reference is made to FIG. 9 to facilitate understanding. FIG. 9 is a flow chart of operation of the shutdown module.

In step S902, the process starts.

In step S904, a quantity x of channels transmitting power to a secondary side, overcurrent indicating sub-signals Iocp_1, Iocp_2, ..., Iocp_n, and a voltage Vg of a power grid are obtained. Then, the process proceeds to step S906. In an embodiment, the shutdown module obtains the quantity x of channels in direct-current-side circuitry, which are currently transmitting power to the secondary side, obtains the overcurrent signals Iocp_1, Iocp_2, ..., Iocp_n that corresponds to the candidate quantities of channels transmitting power to the secondary side, and obtains the voltage Vg of the power grid.

In step S906, the quantity x, the overcurrent indicating sub-signals Iocp_1, Iocp_2, ..., Iocp_n, and polarity of the voltage Vg of the power grid are obtained. Then, the process proceeds to step S908. In an embodiment, the shutdown module obtains the quantity x of channels in direct-current-side circuitry, which are currently transmitting power to the secondary side, obtains the overcurrent signals Iocp_1, Iocp_2, ..., Iocp_n that corresponds to the candidate quantities of channels transmitting power to the secondary side, obtains the voltage Vg of the power grid, and then obtains the polarity of the voltage Vg.

In step S908: it is determined whether Iocp_x for the current quantity has a value of zero. The process proceeds to step S910 in case of positive determination and proceeds to step S918 in case of negative determination. The overcurrent indicating sub-signal locp_x has two candidate values, which are 0 and 1. Iocp_x being 0 indicates that an overcurrent occurs for the current quantity x of channels, in direct-current-side circuitry, transmitting power to the secondary side. Iocp_x being 1 indicates that the overcurrent does not occur for the current quantity x of channels transmitting power to the secondary side. The process proceeds to step S910 when Iocp_x = 0 and terminates when Iocp_x = 1.

In step S910, it is determined whether the polarity of the voltage Vg is positive. The process proceeds to step S912 in case of positive determination and proceeds to step S914 in case of negative determination. The multiple switch transistors operate in different modes under different polarity of the voltage of the power grid. Hence, when Iocp_x = 0, it is necessary to further determine whether the polarity of the voltage Vg is positive.

In step S912, it is determined that shutdown of switch transistors S5 and S7 are to be performed before shutdown of switch transistors S6 and S8. Afterwards, the process proceeds to step S916. When the polarity of the grid voltage Vg is positive, switch transistors S5 and S7 operate in the PWM mode, and switch transistors S6 and S8 operate in the bypass mode. In such case, switch transistors S5 and S7 need to be shut down first, and then the switch transistors S6 and S8 need to be shut down after a certain delay.

In step S914, it is determined that shutdown of switch transistors S6 and S8 are to be performed before shutdown of switch transistors S5 and S7. Afterwards, the process proceeds to step S916. When the polarity of the grid voltage Vg is negative, switch transistors S6 and S8 operate in the PWM mode, and switch transistors S5 and S7 operate in the bypass mode. In such case, switch transistors S6 and S8 need to be shut down first, and then the switch transistors S5 and S7 need to shut down after a certain delay.

In step S916, a driving signal is outputted to perform a shutdown operation. A shutdown control signal for the switch transistors is transmitted to a driving circuit of the secondary side, such that the driving circuit implements the shutdown. Thereby, the switch transistors in bidirectional switch(es) in circuitry where the overcurrent occurs are protected.

In step S918, the process terminates.

On a basis of the foregoing circuits for protecting the micro inverter, a circuit system having micro inverter topology is further provided according to embodiments of the present disclosure. The circuit system comprises micro-inverter circuitry and the above circuit for protecting the micro inverter. The micro-inverter circuitry comprises primary-side bridge arm circuitry, a high-frequency transformer, and secondary-side bridge arm circuitry.

As an example, FIG. 1 shows a schematic diagram of the micro-inverter circuitry. The primary-side bridge arm circuitry is connected to a photovoltaic module and comprises an H-bridge circuit. A middle part of the circuit topology is the high-frequency transformer capable of boosting voltage and achieving electrical isolation between a primary side and a secondary side. The secondary-side bridge arm circuitry is connected to a power grid and comprises multiple switch transistors. A bidirectional switch comprising switch transistors S5 and S6 is located in an upper arm of the secondary-side bridge arm circuitry, and a bidirectional switch comprising switch transistors S7 and S8 is located in a lower arm of the secondary-side bridge arm circuitry. Each switch transistor has a parallel diode.

As another example, FIG. 2 shows a schematic diagram of the micro-inverter circuitry. The micro-inverter circuitry comprises multiple photovoltaic modules and multiple high-frequency transformers, which share the same bidirectional-switch bridge arm and the same capacitor bridge arm in the secondary-side bridge arm circuitry.

Herein the protection circuit is provided for the micro-inverter circuitry. Operating states of the switch transistors can be adjusted accurately and timely when overcurrent occurs in the secondary-side bridge arm circuitry, and reliable protection against damage is provided on the switch transistors.

In embodiments of the present disclosure, unless otherwise specified or limited, the terms "installed", "connected", and "connection" should be construed in a broad sense. For example, they may refer to fixed connection, detachable connection, or integral connection, they may refer to mechanical connection or electrical connection, they may refer to direct connection or indirect connection via an intermediate medium, and they may refer to connection between inner spaces of two components. Those skilled in the art can appreciate specific meanings of the terms on a basis of specific situations.

Some described functions may be implemented as a software functional unit and may be sold or used as an independent product. In such case, the function may be stored in a computer readable storage medium. Hence, an essence of the technical solution of the present disclosure, a part of the technical solution contributing to the prior art, or simply a part of the technical solution may be implemented as a software product, and the computer software product may be stored in a storage medium and comprises multiple instructions configured to enable a computer device (which may be a personal computer, a server, or a network device) to perform all or a part of steps of any foregoing method embodiment. The storage medium includes various media capable of storing a program code, for example, may be a USB disk, a mobile hard disk, a read-only memory (ROM), a random-access memory (RAM), a magnetic disk, or an optical disc.

Here orientation or a positional relationship indicated by the terms such as "center", "upper", "lower", "left", "right", "vertical", "horizontal", "inner", "outside", and the like are based on orientation or a positional relationship as shown in the drawings. These terms are merely intended for facilitating and simplifying the description, rather than indicating or implying that apparatuses or components must follow specific orientation or must be constructed or operated in specific orientation. Therefore, the terms shall not be construed as a limitation. In addition, the terms such as "first", "second" and "third" are merely intended for facilitating description, not implying or indicating relative importance.

The above embodiments are only specific embodiments of the present disclosure and are intended for illustrating technical solutions of the present disclosure rather than limiting them. The protection scope of the present disclosure is not limited to these embodiments. Although the present disclosure has been described in detail with reference to the foregoing embodiments, those skilled in the art may modify or vary the technical solutions described in the foregoing embodiments within a technical scope disclosed herein or may make some equivalent replacements on some technical features. Such modification, variation, or replacements not departing from a spirit and the scope of technical solutions in embodiments of the present disclosure shall fall within the protection scope of the present disclosure. Therefore, the protection scope of the present disclosure is subject to the protection scope of the claims.

## Claims

1. A circuit for protecting a micro inverter, comprising a current sampling module, a hardware adjusting module, and a shutdown module, which are sequentially connected, wherein:
the current sampling module is arranged in secondary-side bridge arm circuitry of micro-inverter circuitry;
the shutdown module is connected to driving circuitry for the secondary-side bridge arm circuitry;
the current sampling module is configured to collect a signal representing a first current in a bridge arm of the secondary-side bridge arm circuitry, wherein the secondary-side bridge arm circuitry comprises at least one bidirectional switch comprising a plurality of switch transistors, and a switch transistor of the plurality of switch transistors is located in the bridge arm;
the hardware adjusting module is configured to:
receive the signal representing the first current and a signal representing a preset reference current; and
output an overcurrent indicating signal for the signal representing the first current, wherein the overcurrent indicating signal is configured to indicate whether the first current is an overcurrent; and
the shutdown module is configured to:
receive the overcurrent indicating signal and a signal representing a polarity of a power grid; and
output a shutdown control signal for the plurality of switch transistors to enable the driving circuitry to shut down the plurality of switch transistors in the secondary-side bridge arm circuitry, wherein the shutdown control signal indicates a preset sequence of shutting down switch transistors in the plurality of switch transistors.

2. The circuit according to claim 1, wherein:
the secondary-side bridge arm circuitry comprises a bidirectional-switch bridge arm and a capacitor bridge arm;
the switch transistors in the plurality of switch transistors are connected in series in the bidirectional-switch bridge arm; and
the current sampling module is arranged in a main power path of the bidirectional-switch bridge arm.

3. The circuit according to claim 1 or 2, wherein:
the current sampling module comprises a sampling resistor connected in series in the main power path, and
the signal representing the first current depends on a voltage across the sampling resistor and resistance of the sampling resistor.

4. The circuit according to claim 1 or 2, wherein:
the current sampling module comprises a current transformer, and
the signal representing the first current depends on an output current of the current transformer and a quantity of turns of a coil in the current transformer.

5. The circuit according to claim 1, wherein the hardware adjusting module is configured to:
receive the signal representing the first current and the signal representing the reference current; and
output the overcurrent indicating signal for the signal representing the first current according to a relationship between magnitude of the signal representing the first current and magnitude of the signal representing the reference current.

6. The circuit according to claim 1, wherein:
the micro-inverter circuitry comprises the secondary-side bridge arm circuitry having a single channel and direct-current-side circuitry having a plurality of channels;
each channel of the plurality of channels in the direct-current-side circuitry comprises a respective transformer and a respective channel of primary-side bridge arm circuitry; and
the hardware adjusting module comprises a plurality of comparators, and a quantity of comparators in the plurality of comparators depends on a quantity of channels in the plurality of channels of the direct-current-side circuitry.

7. The circuit according to claim 6, wherein:
the quantity of comparators in the plurality of comparators is equal to the quantity of channels in the plurality of channels of the direct-current-side circuitry;
among the plurality of comparators, different comparators receive sub-signals representing different reference currents and correspond to different quantities of channels, which transmit power to the secondary-side bridge arm circuitry, among the plurality of channels of the direct-current-side circuitry; and
the sub-signal representing the respective reference current received by each comparator of the plurality of comparators matches the respective quantity of channels, which transmit power to the secondary-side bridge arm circuitry, corresponding to said comparator.

8. The circuit according to claim 7, wherein:
the quantity of comparators in the plurality of comparators is equal to N;
when a serial number of a comparator of the plurality of comparators is equal to x,
the respective quantity of channels corresponding to the comparator is equal to x, and
the comparator receives the sub-signal representing the reference current for: the quantity of channels, which transmit power to the secondary-side bridge arm circuitry, among the plurality of channels of the direct-current-side circuitry being equal to x; and
N is an integer greater than zero, and x is an integer greater than or equal to zero and less than or equal to N.

9. The circuit according to claim 6, wherein each comparator of the plurality of comparators is configured to:
receive the signal representing the first current and a sub-signal representing a respective reference current, and
output a respective overcurrent indicating sub-signal, wherein the overcurrent indicating sub-signal having a first value indicates that the first current does not exceed a respective threshold, and the overcurrent indicating sub-signal having a second value indicates that the first current exceeds the respective threshold; and
wherein the overcurrent indicating signal outputted by the hardware adjusting module comprises the respective overcurrent indicating sub-signal outputted by each comparator.
The overcurrent signals output by the hardware adjusting module include the overcurrent indicating signals output by all comparators.

10. The circuit according to claim 6, wherein the hardware adjusting module comprises a current adjusting unit configured to adjust one or both of the signal representing the first current and signal representing the reference current.

11. The circuit according to claim 6, wherein the plurality of comparators comprises:
a hardware comparator, or
an analog comparator in a digital-signal processing chip.

12. The circuit according to claim 1, wherein the shutdown module is configured to:
receive the overcurrent indicating signal and the signal representing the polarity of the power grid; and
output the shutdown control signal for the plurality of switch transistors according to the signal representing the polarity of the power grid, in response to the overcurrent indicating signal indicating that the first current is the overcurrent.

13. The circuit according to claim 1, wherein the shutdown module is configured to:
determine a quantity of channels, which transmit power to the secondary-side bridge arm circuitry, among one or more channels in direct-current-side circuitry;
obtain an overcurrent indicating sub-signal for the determined quantity from the overcurrent indicating signal outputted by the hardware adjusting module;
obtain the signal representing the polarity of the power grid; and
output the shutdown control signal for the plurality of switch transistors according to the overcurrent indicating sub-signal for the determined quantity and the signal representing the polarity of the power grid.

14. The circuit according to claim 13, wherein:
the secondary-side bridge arm circuitry comprises the plurality of transistors, in which the switch transistors are connected in series;
the shutdown module is configured to output a first shutdown control signal, in response to:
the overcurrent indicating sub-signal for the determined quantity indicating that the first current exceeds a threshold, and
the signal representing the polarity of the power grid signal indicating positive polarity; and
the first shutdown control signal is configured to: shut down one or more transistors operating in a pulse-width-modulation mode among the plurality of switch transistors, and then shut down one or more transistors operating in a bypass mode among the plurality of switch transistors.

15. The circuit according to claim 13, wherein:
the secondary-side bridge arm circuitry comprises a first switch transistor, a second switch transistor, a third switch transistor, and a fourth switch transistor, which are connected in series;
the shutdown module is configured to output the first shutdown control signal, in response to:
the overcurrent indicating sub-signal for the determined quantity indicating that the first current exceeds the respective threshold, and
the signal representing the polarity of the power grid signal indicating positive polarity;
the first shutdown control signal is configured to: shut down the first switch transistor and the third switch transistor, and then shut down the second switch transistor and the fourth switch transistor; and
in response to the polarity of the power grid signal being positive, the first switch transistor and the third switch transistor operate in the pulse-width-modulation mode, and the second switch transistor and the fourth bidirectional transistor operate in the bypass mode.

16. The circuit according to claim 13, wherein the secondary-side bridge arm circuitry comprises a first switch transistor, a second switch transistor, a third switch transistor, and a fourth switch transistor, which are connected in series;
the shutdown module is configured to output the second shutdown control signal, in response to:
the overcurrent indicating sub-signal for the determined quantity indicating that the first current exceeds the respective threshold, and
the signal representing the polarity of the power grid signal indicating negative polarity;
the second shutdown control signal is configured to: shut down the second switch transistor and the fourth switch transistor, and then shut down the first switch transistor and the second switch transistor; and
in response to the polarity of the power grid signal being negative, the second switch transistor and the fourth switch transistor operate in the pulse-width-modulation mode, and the first switch transistor and the third bidirectional transistor operate in the bypass mode.

17. A circuit system having micro inverter topology, comprising:
the circuit according to any one of claims 1 to 16; and
the micro-inverter circuitry, comprising primary-side bridge arm circuitry, one or more transformers, and the secondary-side bridge arm circuitry.
